(19) Europäisches Patentamt
European Patent Office
Office européen des brevets

(11) EP 2 226 819 A1

(12) **EUROPEAN PATENT APPLICATION**
published in accordance with Art. 153(4) EPC

(43) Date of publication:
08.09.2010 Bulletin 2010/36

(51) Int Cl.:
*H01F 38/14* (2006.01)   *H01F 27/28* (2006.01)
*H01F 27/32* (2006.01)   *H01F 41/12* (2006.01)
*H02J 17/00* (2006.01)

(21) Application number: 08865784.6

(22) Date of filing: 24.12.2008

(86) International application number:
PCT/JP2008/073422

(87) International publication number:
WO 2009/081934 (02.07.2009 Gazette 2009/27)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 25.12.2007 JP 2007332841

(71) Applicant: Panasonic Electric Works Co., Ltd
Kadoma-shi
Osaka 571-8686 (JP)

(72) Inventors:
• SUZUKI, Masayuki
Kadoma-shi
Osaka 571-8686 (JP)
• KOBAYASHI, Kentaro
Kadoma-shi
Osaka 571-8686 (JP)

• KITAMURA, Hiroyasu
Kadoma-shi
Osaka 571-8686 (JP)
• KITAMURA, Kota
Kadoma-shi
Osaka 571-8686 (JP)
• YABUUCHI, Hidekazu
Kadoma-shi
Osaka 571-8686 (JP)
• TAMURA, Hideki
Kadoma-shi
Osaka 571-8686 (JP)

(74) Representative: Appelt, Christian W.
Forrester & Boehmert
Pettenkoferstrasse 20-22
80336 München (DE)

(54) **PLANE COIL, AND NON-CONTACT POWER TRANSMISSION DEVICE USING THE SAME**

(57)     This invention has an object to a planar coil, a contactless electric power transmission device using the same. This planar coil is configured to suppress an eddy current developed between adjacent turns of wire for minimizing adverse effects on ambient electrical appliances resulting from heat generation. The planar coil *1* in the present invention is formed of spiral shaped wire *7* coated with thinned insulative film, in which adjacent turns of the wire *7* are spaced in radial direction at such a predetermined interval to suppress an eddy current. This planar coil *1* its preferably employed as a power transmission coil or power receiving coil.

*FIG. 1*

**Description**

TECHNICAL FIELD

This invention relates to a planar coil made of spiral-shape wire, a contactless electric power transmission device using the same.

BACKGROUND ART

In recent years, many contactless charging devices are widely available. Each of these contactless charging devices is equipped with a main body and a charger for contactlessly charging the main body. Each of these contactless charging devices includes a power transmission coil in the charger and a power receiving coil in the main body, and is configured to transmit the electric power to the main body from the charger through electromagnetic induction developed between these coil.
In general, this main body has been applied to cordless telephone, shaver, toothbrush, or the like. This main body can be also applied to cellular phone terminal device, or the like, as proposed in Japanese unexamined patent application publication 2006-311712. The main body and charger are required to be thin or compact for use in the cellular phone terminal device. In order to meet the requirement, each of the power transmission coil and the power receiving coil can be formed of a planar coil. The planar coil is formed of a spiral-shape wire in which adjacent turns are spaced in radial direction to have a spiral configuration on a single plane. This planar coil differs in wining direction from general coils each formed of axially coiled wire.
In order to meet the requirement that the main body and charger be thin or compact, the planar coil is disposed in each of the main body and charger, as mentioned above, In the main body and charger, other electric appliances are disposed close to this planar coil, and easily adversely affected by heat generated in this planar coil. In particular, the main body is strongly required to be thin and compact, as well as being equipped with a secondary battery as one of electrical appliances susceptible to external heat. In view of these requirements, it is necessary to suppress heat generated in the planar coil.
In conventional planar coils, adjacent turns of the wire are not spaced from each other in its radial direction, but are in intimate contact with each other. When defining the power transmission coil and the power receiving coil, the conventional planar coil suffers from excessive heat due to generation of eddy current between adjacent turns of the wire. When being provided with a cooling unit or a heat dissipating unit to eliminate this problem, the main body needs to be enlarged and fabricated at high cost.

DISCLOSURE OF THE INVENTION

This invention has been accomplished to overcome the above problem, and has an object to provide a planar coil, a contactless electric power transmission device using the same. This planar coil is configured to suppress generation of eddy current between adjacent turns of wire, for prevention of excessive heat adversely affecting ambient electrical appliances.
The planar coil in this invention is a planar coil made of a spiral-shape wire. This planar coil is **characterized in that** adjacent turns of the coil are spaced at such a predetermined interval not to generate an eddy current. Although having simple structure, the planar coil in this invention enables to prevent the generation of eddy current resulting from an interaction between adjacent turns of wire, efficiently suppressing the generation of excessive heat. Even when disposed in the thin and compact device, the planar coil in the present invention enables to prevent the heat generation adversely affecting ambient electrical appliances.
In this planar coil, the wire preferably satisfies the following relations:

$$0.1 \text{ mm} = d2 = 0.8 \text{ mm},$$

$$0.625 = d1/d2 = 11.5,$$

and
in which d1 and d2 are respectively defined as a diameter of the wire and the interval between adjacent turns of the wire. This configuration enables to further suppress the generation of eddy current, minimizing heat generation resulting from the eddy current.
The planar coil is preferred to comprise an insulator interposed between the adjacent turns of the wire, for the purpose of maintaining each predetermined interval between the adjacent turns as well as further preventing the generation of eddy current.
In the above planar coil, the wire is preferably composed of a plurality of filaments. The filaments are arranged side-by-side in a closely adjacent relation with each other. Furthermore, the insulator is preferably composed of a plurality of fibers. With this arrangement, the wire can be bundled with the insulator and coiled into a spiral configuration automatically with the use of a winding device, whereby it is possible to manufacture the planar coil at a very high productivity and at a reduced-cost.
In this invention, a contactless electric power transmission device comprises the above planar coil which defines one or both of a power transmission coil and a power receiving coil. The contactless electric power transmission device in this invention can be fabricated without need for particular components, enabling to reduce its size and its fabrication cost. Even when electrical components are designed to be thin and compact, this contactless electric power transmission device enables to prevent adverse effects on other electrical appliances resulting from heat generation of the planar coil.

BRIEF DESCRIPTION OF THE DRAWINGS

FIG. 1 shows a plan view of a planar coil in first embodiment of the present invention.

FIG. 2 shows a side view of a contactless electric power transmission device using the above planar coil.

FIG. 3 shows circuits of the contactless electric power transmission device.

FIG. 4 shows variances in temperature rise, alternating current resistance, and a ratio of alternating current resistance to direct current resistance.

FIG. 5 shows a planar coil in second embodiment of the present invention (a) during automatic winding and (b) after winding.

FIG 6 shows a schematic sectional view of the above planar coil.

FIG. 7 shows (a) a sectional view and (b) a perspective view of insulative fibers for use in the above planar coil.

FIG. 8 shows the above planar coil disposed to be in intimate contact with a magnetic layer.

BEST MODE FOR CARRYING OUT THE INVENTION

(First embodiment)

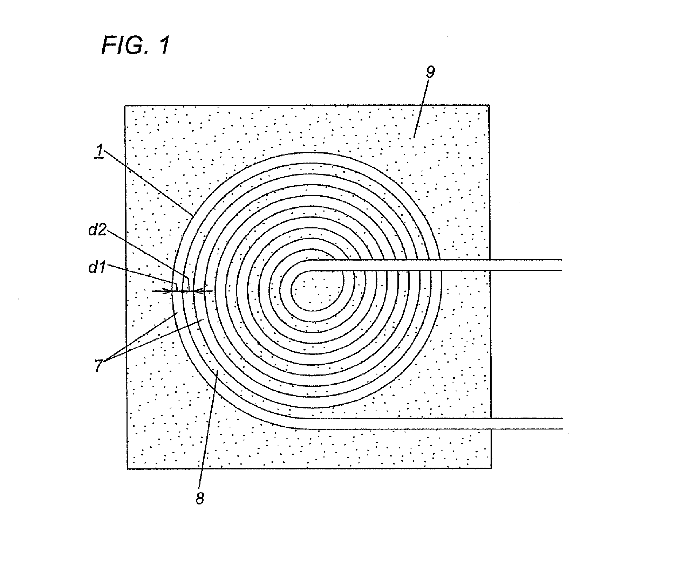

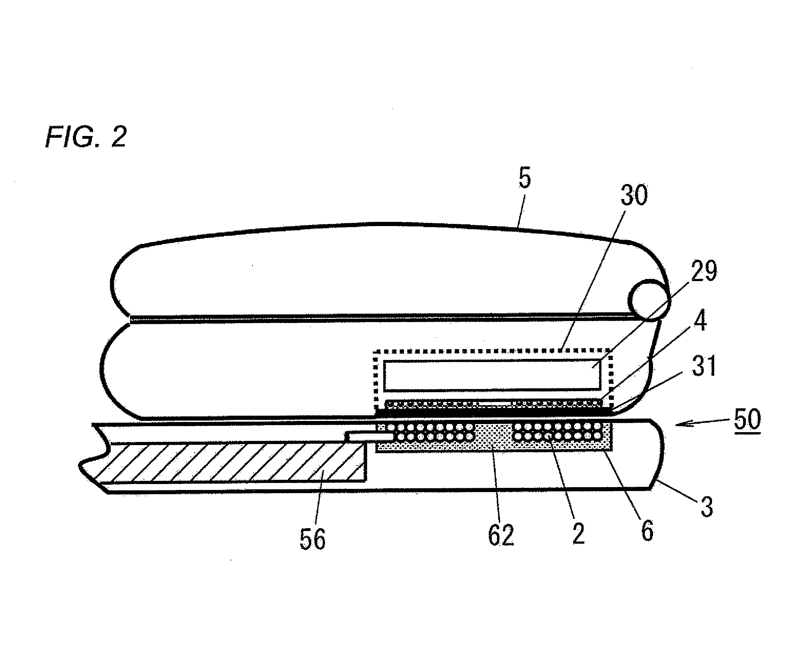

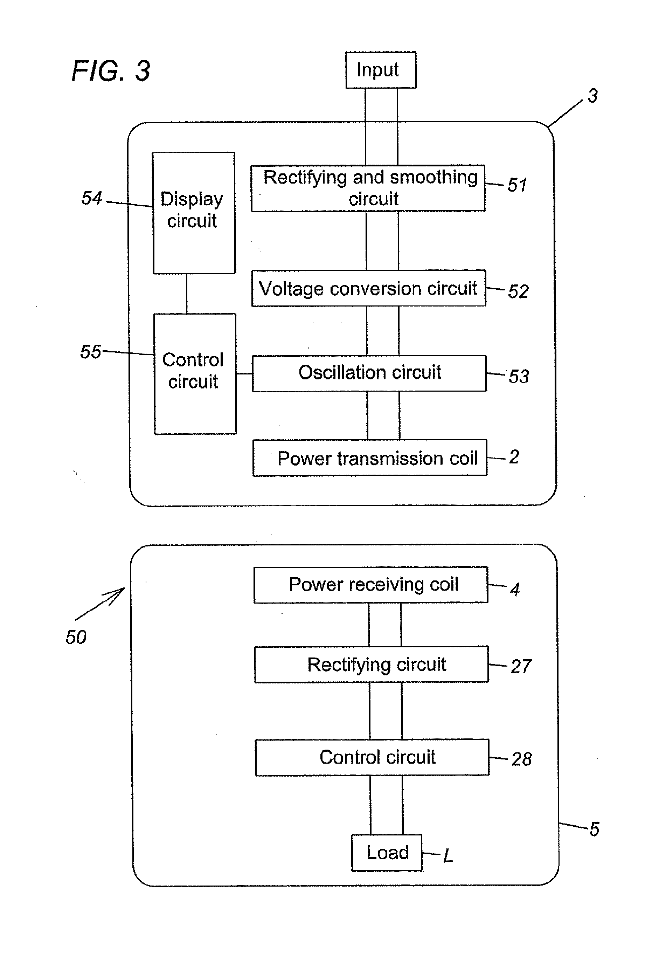

Hereafter, explanations are given as to a planar coil in this embodiment, with reference to FIGs. FIG. 1 shows a planar coil 1 in this embodiment. Each of FIGS. 2 and 3 shows a contactless electric power transmission device 50 using this planar coil 1.
This contactless electric power transmission device 50 comprises a recharger 3 having a power transmission coil 2 and a main body 5 having a power receiving coil 4. The main body 5 in FIG. 2 is a mobile phone. As shown in FIG. 3, the recharger 3 includes a rectifying and smoothing circuit 51, a voltage conversion circuit 52, an oscillation circuit 53, a display circuit 54, a control circuit 55, and the power transmission coil 2. The main body 5 includes the power receiving coil 4, a rectifying circuit 27, a control circuit 28, and a load L mainly made of secondary battery 29. A component indicated by 56 in FIG. 2 is a printed substrate mounting thereon the circuits 51 to 55. A component indicated by 6 is a power transmission coil block composed of the power transmission coil 2 and a magnet 62.
The recharger 3 and the main body 5 are respectively provided with the power transmission coil 2 as a primary coil and the power receiving coil 4 as a secondary coil. In this configuration, the recharger 3 is allowed to supply electric power to the main body 5 via electromagnetic induction developed between these coils. The power receiving coil 4 of the main body 5 are disposed at rear side of a lid 31 covering therewith an opening of the accommodating space 30 which accommodates therein the secondary battery 29, as shown in FIG. 2.
The planar coil 1 on this embodiment shown in FIG. 1 is employed as the power receiving coil 4 of the main body 5. A spiral-shape wire 7 of the planar coil 1 is coated with an insulative film having a significantly small thickness (an enamel in this embodiment), and coiled into a spiral configuration on a single plane. The adjacent turns of the wire 7 are spaced to each other in radial direction at such a predetermined interval not to generate an eddy current. The wire 7 may be composed of a single filament, a bundle of plural filaments, or a strand of plural filaments. The adjacent turns of the wire 7 are spaced at such a predetermined interval to form a spiral-shape air layer 8.
In fabrication of the planar coil 1 in this embodiment, the wire 7 is placed to a sheet 9 with the use of a winding head (not shown) of a winding device. Specifically, the wire 7 is sequentially pulled out from the wining head and then plotted on an adhesion layer which is provided on the sheet 9 in advance. The plotting is performed in accordance with a predetermined winding way. Then, an encapsulating sheet (not shown) is adhered to the adhesion layer provided on the sheet 9, for encapsulating therewith the wire 7. The planar coil 1 in this embodiment is not required to be fabricated by the above winding, but may be formed into spiral-shape wire 7 by etching such that adjacent turns are spaced from each other, or the like.

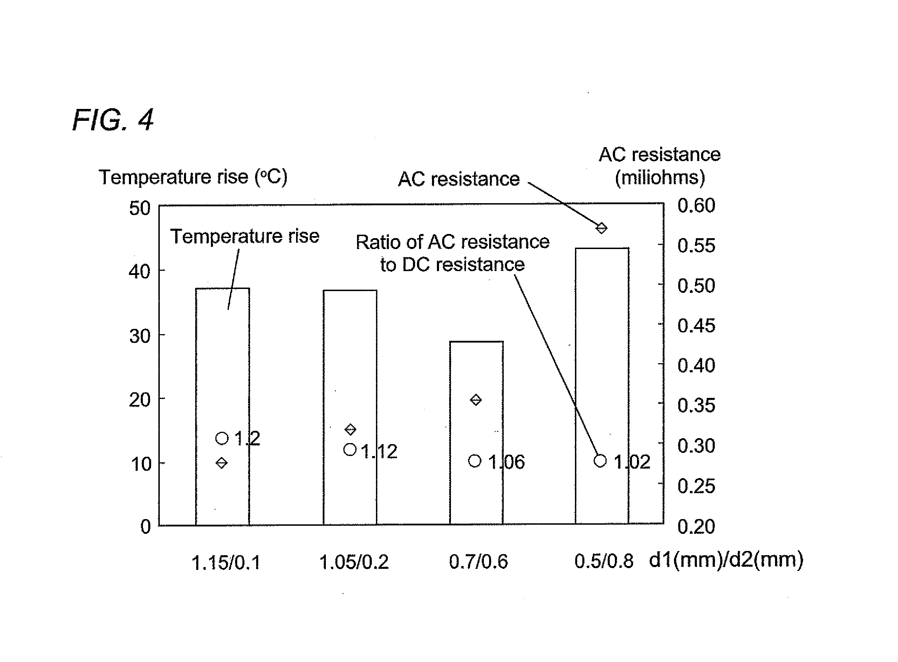

FIG. 4 shows variances in the temperature rise [°C], alternating current (AC) resistance [mΩ], and the ratio of AC resistance to direct current (DC) resistance for planar coils 1 each having a dimension of 30 mm in outer diameter and 5 mm in inner diameter. These planar coils are formed of wires 7 having different d1/d2 ratios (d1/d2 = 1.15/0.1, 1.05/0.2, 0.7/0.6, and 0.5/0.8) to give an electric output of 2.75 W, in which d1 and d2 are respectively defined as a diameter [mm] of the wire and an interval [mm] between the adjacent turns of the wire.
FIG. 4 shows that the planar coil 1 having d1 of 0.7 mm and d2 of 0.6 mm exhibits the lowest temperature rise. In view of the planar coil having d1 of 1.15 mm and d2 of 0.1 mm which is found to exhibit the lowest AC resistance, the planar coil 1 having d1 of 0.7 mm and d2 of 0.6 mm is least likely to develop eddy current among these planar coils, and probably hardly suffers from the temperature rise resulting from development of the eddy current.
In this embodiment, the planar coil 1 may be employed as the power transmission coil 2 of the recharger 3. With these planar coils 1 being employed both for the power transmission coil 2 and the power receiving coil 4, the contactless electric power transmission device enables to suppress heat generation of the planar coil. This contactless electric power transmission device can be formed to have thin and compact configuration without giving adversely effects on other electrical parts resulting from the heat generation.

(Second embodiment)

Hereafter, explanations are given as to different components of the planar coil *1* in this embodiment. Like parts as those in the planar coil *1* in the first embodiment are designated by like reference numerals, and no duplicate explanation deemed necessary.

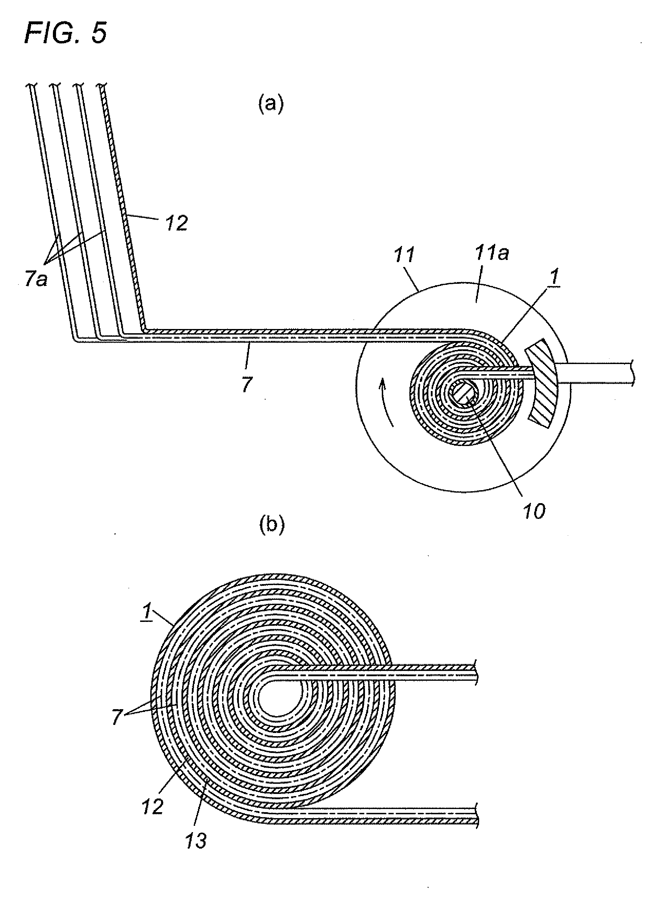

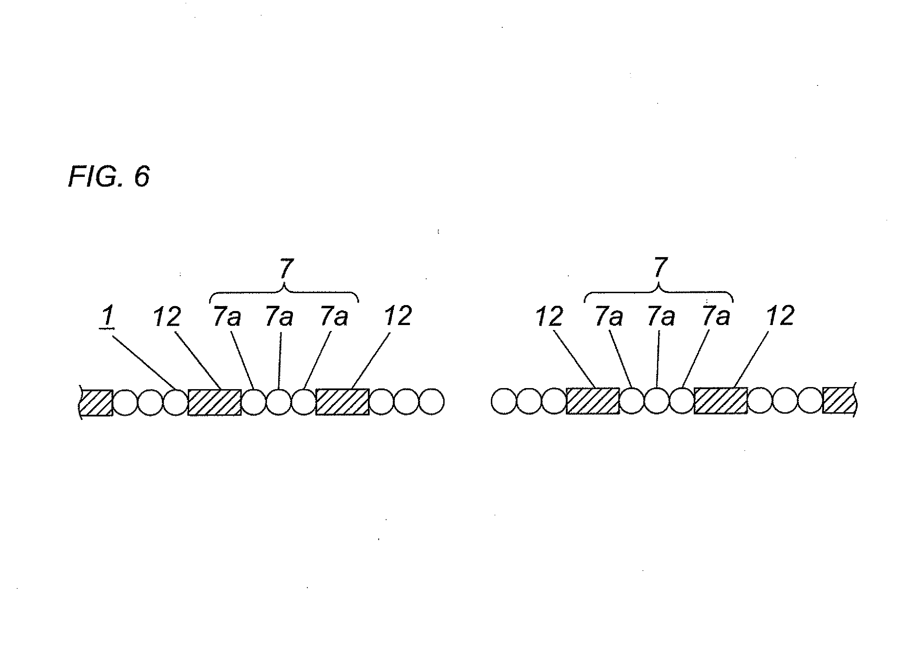

FIGS. 5 and 6 show the planar coils *1* in this embodiment. In fabrication of this planar coil *1*, the wire *7* is automatically coiled into spiral configuration around a wining shaft *10* of the wining apparatus. The wining shaft *10* is disposed to project from the rotation center of a smooth surface *11a* of the rotation disc *11*. As the wining shaft *10* and the rotation disc *11* rotate while the wire *7* is fixed at its one end, the wire *7* is automatically coiled on the smooth surface *11a* of the disc *11* around the wining shaft *10.*

As shown in FIG. 5, a plurality of (three in this embodiment) filaments *7a* are bundled and coiled with a single insulative fiber *12* such that a set of the filaments *7a* and the single insulative fiber *12* are arranged alternately in radial direction. As a result, a plurality of filaments *7a* are bundled and coiled to form the spiral-shape wire *7* with the insulative fiber *12* being interposed between turns of the wire *7* adjacent to each other in radial direction. The plural filaments *7a* is not required to be arranged in a row, but may be aligned in plural rows.

The insulative fiber *12* is coiled into spiral configuration while being interposed between adjacent turns of wire *7,* such that the adjacent turns of the wire *7* are compulsorily spaced at a constant interval. The insulator *13* are formed of insulative fiber *12*, and interposed between the adjacent turns of the wire *7* in order to efficiently suppress generation of the eddy current. Compared to the planar coil with the air layer being interposed between adjacent turns as in the first embodiment, the planar coil in this embodiment enables to rapidly dissipate heat through the insulator *13* (i.e., the insulative fiber *12*) which is in close contact with the wire *7.*

In addition, in fabrication of the planar coil in this embodiment, the wire *7* and the insulative fiber *12* are coiled together around the wining shaft *10.* The planar coil in this embodiment can be fabricated at much higher productivity and a significantly lower cost, than that in first embodiment fabricated by wining or etching.

The insulative fiber *12* can be formed of a resin such as nylon 6 and polyester. In order to achieve rapid heat dissipation, the planar coil *1* in this embodiment is preferably formed of a thermally conductive material. The insulative fiber *12* is not required to be formed of a single fiber, but may be formed of a bundle of plural filaments or a strand of plural filaments. In addition, the insulative fiber *12* is not required to have a rectangular-shape section shown in figure, but may have a circular-shape or eclipsed shape section.

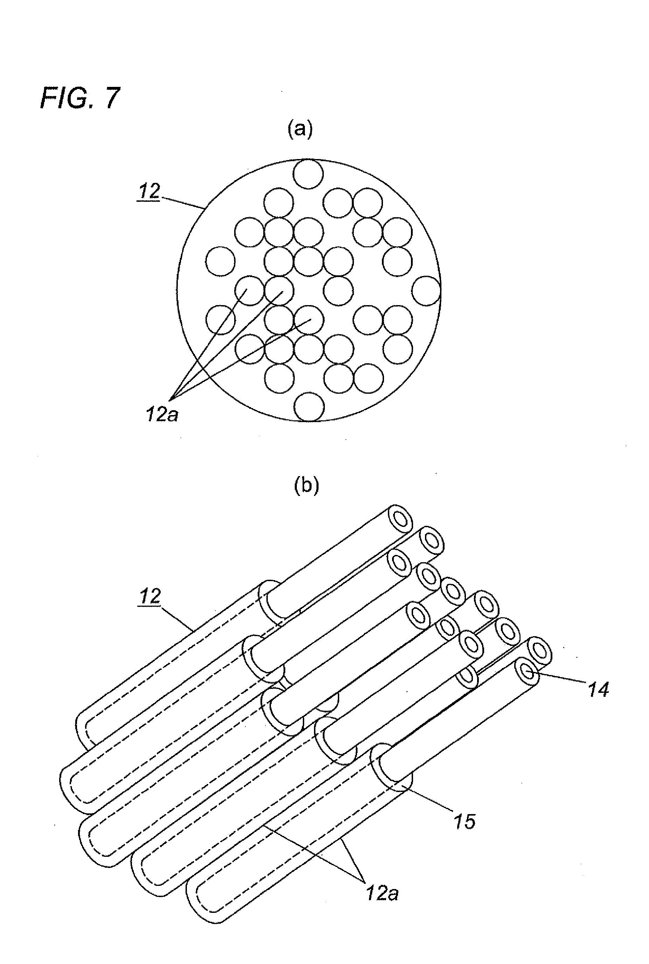

The insulative fiber *12* in FIG. 7 can be formed of a bundle of many filaments *12a*. Each filament *12a* includes a core *14* and a pod *15* covering therewith the core. The core *14* is made of polyester having high viscosity and high melting point of 250 °C. The pod *15* is made of polyester copolymer having low melting point of 160 °C. In production of this insulative fiber, the pod *15* is melted to exhibit its adhesive property by heating.

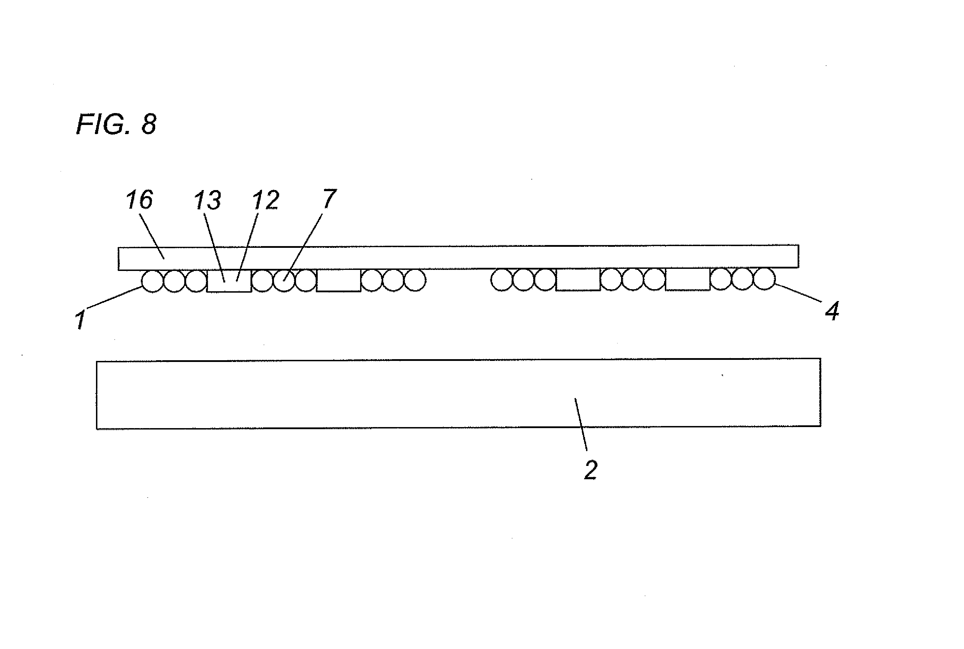

For example, a magnetic layer *16* is preferably disposed as shown in FIG. 8, for efficiently receiving electric power via the power receiving coil *4* of the planar coil *1.* The magnetic layer. *16* is disposed firmly to the power receiving coil *4* so as to be remote from the power transmission coil *2*. The magnetic layer *16* may be disposed firmly to either the power receiving coil *4* made of the planar coil *1* of the first embodiment, or the power transmission coil *2* made of the planar coil *1* in first or second embodiment.

**Claims**

1. A planar coil comprising a spiral shaped wire, wherein adjacent turns of said wire are spaced at a predetermined interval.

2. The planar coil as set forth in claim 1, wherein said wire satisfies following relations:

   0.1 mm = d2 = 0.8 mm, and
   0.625 =d1/d2=11.5.

   in which d1 and d2 are respectively defined as a diameter of said wire and the interval between adjacent turns of said wire.

3. The planar coil as set forth in claim 1 or 2, further comprising an insulator interposed between said adjacent turns of said wire.

4. The planar coil as set forth in claim 3, wherein said wire is composed of a plurality of filaments, said filaments being arranged side-by-side in a closely adjacent relation with each other

5. The planar coil as set forth in claim 3 or 4, wherein said insulator is composed of a plurality of fibers.

6. A contactless electric power transmission device comprising the planar coil according to one of dams 1 to 5, said planar coil defining one or both of a power transmission coil and a power receiving coil.

**Amended claims under Art. 19.1 PCT**

1. A planar coil comprising a spiral shaped wire, wherein adjacent turns of said wire are spaced at such a predetermined interval not to generate an eddy current.

2. The planar coil as set forth in claim 1, wherein said wire satisfies following relations:

    $0.1$ mm $\leq d2 \leq 0.8$ mm, and
    $0.625 \leq d1/d2 \leq 11.5$.

    in which d1 and d2 are respectively defined as a diameter of said wire and the interval between adjacent turns of said wire.

3. The planar coil as set forth in claim 1 or 2, further comprising an insulator interposed between said adjacent turns of said wire.

4. The planar coil as set forth in claim 3, wherein said wire is composed of a plurality of filaments, said filaments being arranged side-by-side in a closely adjacent relation with each other

5. The planar coil as set forth in claim or 4, wherein said insulator is composed of a plurality of fibers.

6. A contactless electric power transmission device comprising the planar coil according to one of claims 1 to 5, said planar coil defining one or both of a power transmission coil and a power receiving coil.

FIG. 1

FIG. 2

## FIG. 3

```
                              ┌─────────┐
                              │  Input  │
                              └─────────┘
```

3

54 ── Display circuit

Rectifying and smoothing circuit ── 51

Voltage conversion circuit ── 52

55 ── Control circuit

Oscillation circuit ── 53

Power transmission coil ── 2

50

Power receiving coil ── 4

Rectifying circuit ── 27

Control circuit ── 28

5

Load ── L

*FIG. 4*

EP 2 226 819 A1

*FIG. 5*

(a)

12

7a

11    11a    1

7

10

(b)

1

7

12

13

*FIG. 6*

EP 2 226 819 A1

## FIG. 7

(a)

12

12a

(b)

12

14

15

12a

FIG. 8

EP 2 226 819 A1

| | | |
|---|---|---|
| **INTERNATIONAL SEARCH REPORT** | International application No. | |
| | PCT/JP2008/073422 | |

A. CLASSIFICATION OF SUBJECT MATTER
*H01F38/14*(2006.01)i, *H01F27/28*(2006.01)i, *H01F27/32*(2006.01)i, *H01F41/12*
(2006.01)i, *H02J17/00*(2006.01)i

According to International Patent Classification (IPC) or to both national classification and IPC

B. FIELDS SEARCHED

Minimum documentation searched (classification system followed by classification symbols)
H01F38/14, H01F27/28, H01F27/32, H01F41/12, H02J17/00

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-260934 A (TDK Corp.),<br>13 September, 2002 (13.09.02),<br>Par. Nos. [0033] to [0037]; Figs. 1, 3<br>& US 6847284 B2      & WO 2002/071422 A1<br>& CN 1462457 A | 1,2<br>3-6 |
| Y | JP 44-25058 Y1 (Toko, Inc.),<br>22 October, 1969 (22.10.69),<br>Page 1, column 1, lines 23 to 26; column 2,<br>lines 16 to 18; Fig. 3<br>(Family: none) | 3-6 |
| Y | JP 2002-299138 A (Kawasaki Steel Corp.),<br>11 October, 2002 (11.10.02),<br>Par. Nos. [0025] to [0030]; Fig. 1<br>(Family: none) | 6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 March, 2009 (16.03.09) | Date of mailing of the international search report<br>31 March, 2009 (31.03.09) |
|---|---|
| Name and mailing address of the ISA/<br>  Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/073422

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-186086 A (Tokin Corp.), 09 July, 1999 (09.07.99), Par. Nos. [0021] to [0024]; Fig. 1 (Family: none) | 1-6 |
| A | JP 5-128324 A (Mitsubishi Electric Corp.), 25 May, 1993 (25.05.93), Par. Nos. [0025] to [0030]; Figs. 1, 5, 7 & US 5436441 A            & EP 541323 A3 & EP 541323 A2 | 1-6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006311712 A